# EUROPÄISCHE PATENTSCHRIFT

(11) **EP 1 271 396 B1**
(45) Veröffentlichungstag und Bekanntmachung des Hinweises auf die Patenterteilung: **25.05.2005**
(21) Anmeldenummer: 01115229.5
(22) Anmeldetag: 22.06.2001
(51) Int. Cl.: G06K 13/08, G06K 13/06, G06K 7/00

(54) **Kartenleser mit an Schwenkarmen gelagerten Transportrollen**
Card reader comprising transport rollers placed on articulated arms
Lecteur de carte avec des rouleaux de transports placés sur des bras articulés

(43) Veröffentlichungstag der Anmeldung: 02.01.2003
(73) Patentinhaber: ddm hopt + schuler GmbH & Co. KG., D-78612 Rottweil (DE)
(72) Erfinder: Hopt, Jürgen, 78628 Rottweil (DE); Hopt, Karl-Rudolf, Dipl. Ing., 78628 Rottweil (DE); Storz, Michael, Dipl. Ing., 78467 Konstanz (DE)
(74) Vertreter: Kohler Schmid Möbus

(56) Entgegenhaltungen:
- DE-U- 20 002 405
- US-A- 4 684 794
- PATENT ABSTRACTS OF JAPAN vol. 1998, no. 13, 30. November 1998 (1998-11-30) & JP 10 207989 A (NEURON:KK), 7. August 1998 (1998-08-07)

## Beschreibung

Die Erfindung betrifft einen Kartenleser mit drei an Schwenkarmen gelagerten Transportrollen, die in Karteneinführrichtung hintereinander angeordnet sind, wobei die Schwenkarme in einer zur Kartenbahn rechtwinkligen Ebene gegen die Wirkung einer Rückstellkraft verschwenkbar und miteinander bewegungsgekoppelt sind und wobei die in Einführrichtung hintere Transportrolle an einem hinteren Schwenkarm hinter dessen Schwenkachse und die in Einführrichtung vordere Transportrolle an einem vorderen Schwenkarm vor dessen Schwenkachse angeordnet ist.

Ein derartiger Kartenleser ist beispielsweise durch die DE 200 02 405.1 U1 bekannt geworden.

Dieser bekannte Kartenleser umfaßt drei in Karteneinführrichtung hintereinander angeordnete Transportrollen sowie zwei Schwenkarme, die jeweils in einer zur Kartenbahn rechtwinkligen Ebene gegen die Wirkung von Rückstellfedern verschwenkbar sind. Zwischen ihren Schwenkachsen sind die beiden Schwenkarme über eine gemeinsame Drehachse gelenkig miteinander verbunden und damit miteinander gegenläufig bewegungsgekoppelt. Die in Einführrichtung vordere und die hintere Transportrolle sind jeweils an den freien Ende der beiden Schwenkarme gelagert, während die mittlere Transportrolle um die gemeinsame Drehachse gelagert ist. Wenn die Karte von der mittleren Transportrolle angetrieben wird, sind die beiden anderen Transportrollen um mehr als die Kartenstärke angehoben und damit aus der Kartenbahn vollständig herausgeschwenkt. Die Karte kann, angetrieben allein von der mittleren Transportrolle, an einem Schreib-/Lesekopf für einen Datenaustausch vorbeibewegt werden, ohne daß die beiden anderen Transportrollen diese Bewegung behindern.

Das Hebelverhältnis von mittlerer zu hinterer Transportrolle beträgt bei dem bekannten Kartenleser 1:3,5, d.h., bei einem Hub der mittleren Transportrolle von 1 mm beträgt der Hub der hinteren Transportrolle ca. 3 mm. Bei einem vorgegebenem Anpreßgewicht der mittleren Transportrolle an ihre Gegenrolle von 1000 g beträgt das Anpreßgewicht der hinteren Transport an ihre Gegenrolle nur ca. 300 g. Bei quer, d.h. um ihre Längsmittelachse, gebogenen Karten reicht dieses geringe Anpreßgewicht der hinteren Transportrolle nicht aus, um den einwandfreien Transport der Karte mittels der hinteren Transportrolle sicherzustellen.

Es ist daher die Aufgabe der Erfindung, bei einem Kartenleser der eingangs genannten Art das von der hinteren Transportrolle auf eine eingeführte Karte wirkende Anpreßgewicht zu erhöhen.

Diese Aufgabe wird erfindungsgemäß gelöst durch zwei miteinander gelenkig verbundene mittlere Schwenkarme, wobei der eine mittlere Schwenkarm im Abstand zu seiner Schwenkachse mit dem hinteren Schwenkarm und der andere mittlere Schwenkarm im Abstand zu seiner Schwenkachse mit dem vorderen Schwenkarm gelenkig verbunden ist.

Der mit der Erfindung erzielte Vorteil besteht darin, daß ein geringeres Hebelverhältnis von mittlerer zu hinterer Transportrolle von z.B. 1:1,5 realisiert werden kann. In diesem Beispielsfall betragen bei einem Hub der mittleren Transportrolle von 1 mm der Hub der hinteren Transportrolle ca. 1,5 mm und bei einem vorgegebenem Anpreßgewicht der mittleren Transportrolle an ihre Gegenrolle von 1000 g das Anpreßgewicht der hinteren Transport an ihre Gegenrolle ca. 750 g. Durch dieses hohe Anpreßgewicht der hinteren Transportrolle ist der einwandfreie Transport auch von stark quer gebogenen Karten mittel der hinteren Transportrolle sichergestellt.

Bei besonders bevorzugten Ausführungsformen der Erfindung sind die beiden mittleren Schwenkarme zwischen den Schwenkachsen des hinteren und des vorderen Schwenkarmen miteinander gelenkig verbunden. Dabei ist die mittlere Transportrolle zwischen den Schwenkachsen des vorderen und des hinteren Schwenkarms gelagert, und zwar entweder nur an einem der beiden mittleren Schwenkarme oder an beiden mittleren Schwenkarmen um die Drehachsen ihrer gelenkigen Verbindung.

Vorzugsweise ist ein Lese- und/oder Schreibkopf des Kartenlesers im Bereich der mittleren Transportrolle vorgesehen. Diese Maßnahme hat den Vorteil, daß die Karte, angetrieben nur von der mittleren Transportrolle, am Lese- und/oder Schreibkopf in beide Richtung gleich weit und mit definiertem Anpreßdruck vorbeibewegt werden kann.

Die Rückstellkraft kann zum Beispiel durch eine oder mehrere jeweils auf gelenkige Verbindungen der Schwenkarme und/oder auf Transportrollen wirkende Rückstellfedern gebildet sein, so daß die Transportrollen in ihre in die Kartenbahn eingreifende Lagen vorgespannt sind.

Vorzugsweise ist nur eine einzige Rückstellfeder vorgesehen, die sich unten an den Schwenkachsen der Schwenkarme abstützt und oben an den Drehachsen der gelenkigen Verbindungen des hinteren und vorderen Schwenkarms sowie an der hinteren und vorderen Transportrolle aufliegt. Dazu ist die bevorzugt aus einem Draht gebildete Rückstellfeder zwischen die Achsen der Transportrollen, Schwenkarme und gelenkigen Verbindungen eingefädelt.

Weiterhin ist auf der den Transportrollen gegenüberliegenden Seite der Kartenbahn jeder Transportrolle jeweils eine Gegenrolle als Gegenlager für die transportierte Karte zugeordnet.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: den erfindungsgemäßen Kartenleser mit drei Transportrollen, wobei die Karte von der in Einführrichtung hinteren Transportrolle noch nicht erfaßt ist;
- Fig. 2: den Kartenleser der Fig. 1, wobei die Karte von der hinteren Transportrolle transportiert wird;
- Fig. 3: den Kartenleser der Fig. 1, wobei die Karte von der mittleren Transportrolle transportiert wird; und
- Fig. 4: den Kartenleser der Fig. 1, wobei die Karte von der in Einführrichtung vorderen Transportrolle transportiert wird.

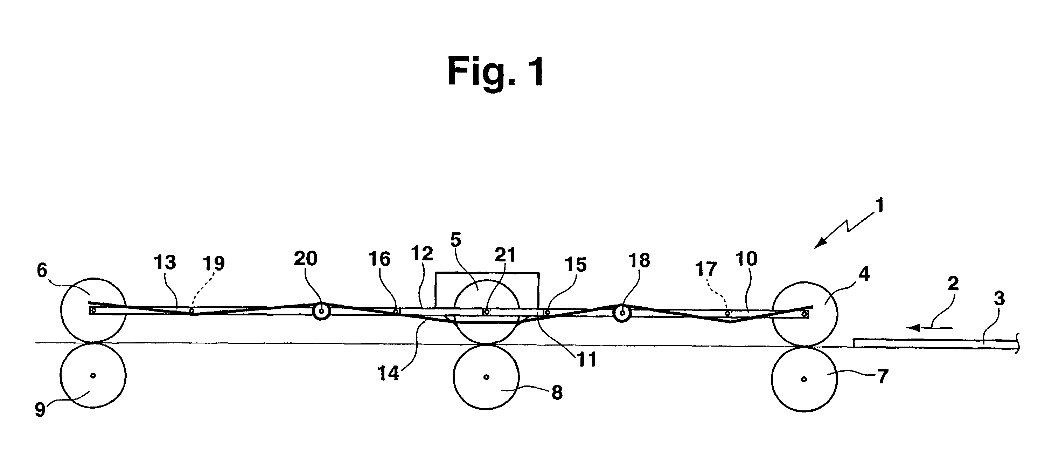

Der in **Fig. 1** schematisch dargestellte Kartenleser **1** umfaßt drei in Einführrichtung **2** der Karte **3** hintereinander angeordnete Transportrollen **4**, **5**, **6**, mittels denen die Karte 3 in und entgegen der Einführrichtung 2 transportiert werden kann. Auf der den Transportrollen 4**,** 5**,** 6 gegenüberliegenden Seite der Kartenbahn sind jeweils Gegenrollen **7**, **8**, **9** als ortsfestes Gegenlager für die transportierte Karte 3 vorgesehen. Die drei Transportrollen 4, 5, 6 sind über Schwenkarme **10**, **11**, **12**, **13**, die jeweils in einer zur Kartenbahn rechtwinkligen Ebene gegen die Wirkung einer Rückstellfeder **14** verschwenkbar sind, miteinander bewegungsgekoppelt.

Die in Einführrichtung 2 hintere Transportrolle 4 ist am freien Ende des sich nach hinten erstreckenden hinteren Schwenkarms 10 hinter dessen ortsfester Schwenkachse **15** und die in Einführrichtung 2 vordere Transportrolle 6 am freien Ende des sich nach vorne erstreckenden vorderen Schwenkarms 13 vor dessen ortsfester Schwenkachse **16** gelagert. Die Transportrollen 4, 6 sind von den Schwenkachsen 15, 16 ihrer Schwenkarme 10, 13 jeweils beabstandet. Ein sich nach vorne erstreckender mittlerer Schwenkarm 11 ist im Abstand zu seiner ortsfesten Schwenkachse **17** mit dem hinteren Schwenkarm 10 zwischen dessen Schwenkachse 15 und hinterer Transportrolle 4 bei **18** gelenkig verbunden. Ein weiterer, sich nach hinten erstreckender mittlerer Schwenkarm 12 ist im Abstand zu seiner ortsfesten Schwenkachse **19** mit dem vorderen Schwenkarm 13 zwischen dessen Schwenkachse 16 und vorderer Transportrolle 6 bei **20** gelenkig verbunden. Die beiden mittleren Schwenkarme 11, 12 sind an ihren einander zugewandten freien Enden, und zwar zwischen den Schwenkachsen 15, 16 des hinteren und des vorderen Schwenkarms 10, 13, miteinander bei **21** gelenkig verbunden. Um die Drehachse dieser gelenkigen Verbindung 21 ist auch die mittlere Transportrolle 5 gelagert.

Solange die Karte 3 noch nicht bis zur hinteren Transportrolle 4 in den Kartenleser 1 eingeführt ist, liegen die Transportrollen 4, 5, 6, von der Rückstellfeder 14 kraftbeaufschlagt, an ihren Gegenrollen 7, 8, 9 an (Fig. 1). Die aus einem Draht gebildete Rückstellfeder 14 ist unten an den ortsfesten Schwenkachsen 15, 16, 17, 19 der Schwenkarme 10, 11, 12, 13 abstützt und liegt oben sowohl auf den Drehachsen der Gelenkverbindungen 18, 20 als auch auf der hinteren und der vorderen Rolle 4, 6 auf, wobei die Rückstellfeder 14 um die Drehachsen der Gelenkverbindungen 18, 20 jeweils einmal gewunden und dadurch lagefixiert ist.

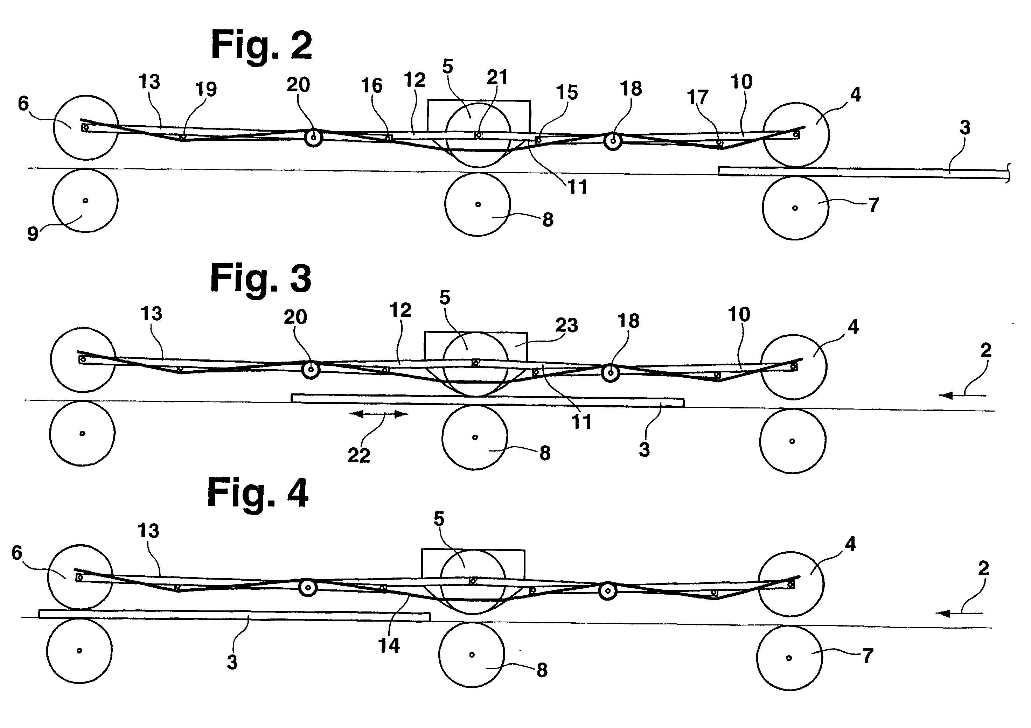

Beim Einführen der Karte 3 zwischen die hintere Transportrolle 4 und deren Gegenrolle 7 wird der hintere Schwenkarm 10 entgegen dem Uhrzeigersinn um seine Schwenkachse 15 verschwenkt, bis die hintere Transportrolle 4 um die Kartenstärke von ihrer Gegenrolle 7 angehoben ist. Aufgrund der Gelenkverbindung 18 wird mit dem hinteren Schwenkarm 10 auch der mittlere Schwenkarm 11 um seine Schwenkachse 17 im Uhrzeigersinn verschwenkt und damit die mittlere Transportrolle 5 von ihrer Gegenrolle 8 angehoben, allerdings um weniger als die Kartenstärke. Aufgrund der Gelenkverbindung 21 wird mit dem mittleren Schwenkarm 11 auch der andere mittlere Schwenkarm 12 um seine Schwenkachse 19 entgegen dem Uhrzeigersinn und damit aufgrund der Gelenkverbindung 20 auch der vordere Schwenkarm 13 um seine Schwenkachse 16 im Uhrzeigersinn verschwenkt. Dadurch wird auch die vordere Transportrolle 6 von ihrer Gegenrolle 9 abgehoben (**Fig. 2**).

Von der hinteren Transportrolle 4 angetrieben, wird die Karte 3 weiter in Einführrichtung 2 transportiert, bis sie zwischen die mittlere Transportrolle 5 und deren Gegenrolle 8 gelangt. Dadurch werden der mittlere Schwenkarme 11 im Uhrzeigersinn und der mittlere Schwenkarme 12 entgegen dem Uhrzeigersinn noch weiter verschwenkt, bis die mittlere Transportrolle 5 um die Kartenstärke von ihrer Gegenrolle 8 angehoben ist. Da aufgrund der Gelenkverbindungen 18, 20 mit den mittleren Schwenkarmen 11, 12 auch der hintere Schwenkarm 10 entgegen dem Uhrzeigersinn und der vordere Schwenkarm 13 im Uhrzeigersinn weiter verschwenken, sind die vordere und die hintere Transportrolle 4, 6 jeweils um mehr als die Kartenstärke angehoben und damit aus der Kartenbahn vollständig herausgeschwenkt. Die Karte 3 kann, angetrieben allein von der mittleren Transportrolle 5, in und entgegen der Einführrichtung 2 (Doppelpfeil **22**), an einem Schreib-/Lesekopf **23** für einen Datenaustausch vorbeibewegt werden, ohne daß die vordere und die hintere Transportrolle 4, 6 diese Bewegung behindern (**Fig. 3**). Der Schreib-/Lesekopf 23 ist seitlich neben der mittleren Transportrolle 5 gegenüberliegend der Gegenrolle 8 angeordnet.

Sobald sich die in Einführrichtung 2 weitertransportierte Karte 3 nicht mehr zwischen mittlerer Transportrolle 5 und Gegenrolle 8 befindet, schwenkt der vordere Schwenkarm 13 unter der Wirkung der Rückstellfeder 14 entgegen dem Uhrzeigersinn so weit zurück, bis die vordere Transportrolle 6 auf der Karte 3 aufliegt und damit nur noch um die Kartenstärke angehoben ist. Aufgrund der Bewegungskopplung der Schwenkarme sind mit der vorderen Transportrolle 6 auch die beiden anderen Transportrollen 4, 5 noch von ihren Gegenrollen 7, 8 abgehoben (**Fig. 4**).

## Patentansprüche

1. Kartenleser (1) mit drei an Schwenkarmen (10, 11, 12, 13) gelagerten Transportrollen (4, 5, 6), die in Karteneinführrichtung (2) hintereinander angeordnet sind, wobei die Schwenkarme (10, 11, 12, 13) in einer zur Kartenbahn rechtwinkligen Ebene gegen die Wirkung einer Rückstellkraft verschwenkbar und miteinander bewegungsgekoppelt sind und wobei die in Einführrichtung (2) hintere Transportrolle (4) an einem hinteren Schwenkarm (10) hinter dessen Schwenkachse (15) und die in Einführrichtung (2) vordere Transportrolle (6) an einem vorderen Schwenkarm (13) vor dessen Schwenkachse (16) angeordnet ist,
**gekennzeichnet durch** zwei miteinander gelenkig verbundene mittlere Schwenkarme (11, 12), wobei der eine mittlere Schwenkarm (11) im Abstand zu seiner Schwenkachse (17) mit dem hinteren Schwenkarm (10) und der andere mittlere Schwenkarm (12) im Abstand zu seiner Schwenkachse (19) mit dem vorderen Schwenkarm (13) gelenkig verbunden ist.

2. Kartenleser nach Anspruch 1, **dadurch gekennzeichnet, daß** die beiden mittleren Schwenkarme (11, 12) zwischen den Schwenkachsen (15, 16) des hinteren und des vorderen Schwenkarms (10, 13) miteinander gelenkig verbunden sind.

3. Kartenleser nach Anspruch 1 oder 2, **dadurch gekennzeichnet, daß** die beiden mittleren Schwenkarme (11, 12) über die Drehachse (21) der mittleren Transportrolle (5) miteinander verbunden sind.

4. Kartenleser nach Anspruch 1 oder 2, **dadurch gekennzeichnet, daß** die mittlere Transportrolle (5) nur an einem der beiden mittleren Schwenkarme (11, 12) gelagert ist.

5. Kartenleser nach einem der vorhergehenden Ansprüche, **dadurch gekennzeichnet, daß** ein Lese- und/oder Schreibkopf (22) des Kartenlesers (1) im Bereich der mittleren Transportrolle (5) vorgesehen ist.

6. Kartenleser nach einem der vorhergehenden Ansprüche, **dadurch gekennzeichnet, daß** die Rückstellkraft durch eine oder mehrere auf gelenkige Verbindungen (18, 19, 21) der Schwenkarme (10, 11, 12, 13) und/oder auf Transportrollen (4, 5, 6) wirkende Rückstellfedern gebildet ist.

7. Kartenleser nach Anspruch 6, **gekennzeichnet durch** eine einzige Rückstellfeder (14), die sich unten an den Schwenkachsen (15, 16, 17, 19) der Schwenkarme (10, 11, 12, 13) abstützt und oben an den Drehachsen der gelenkigen Verbindungen (18, 20) des hinteren und vorderen Schwenkarms (10, 13) und an der hinteren und vorderen Transportrolle (4, 6) anliegt.

8. Kartenleser nach einem der vorhergehenden Ansprüche, **dadurch gekennzeichnet, daß** auf der den Rollen (4, 5, 6) gegenüberliegenden Seite der Kartenbahn jeder Transportrolle (4, 5, 6) jeweils eine Gegenrolle (7, 8, 9) als Gegenlager für die transportierte Karte (2) zugeordnet ist.

## Claims

1. Card reader (1) with three feed rollers (4, 5, 6) mounted on pivot arms (10, 11, 12, 13) and which are serially disposed in the direction (2) of card insertion, the pivot arms (10, 11, 12, 13) being coupled for movement with one another and being pivotable in a plane perpendicular to the card path against the action of a restoring force and whereby the feed roller (4) which is at the rear in the direction (2) of insertion is disposed on a rear pivot arm (10) behind its pivot axis (15) and the feed roller (6) which is in front in the direction (2) of insertion is disposed on a forward pivot arm (13) in front of its pivot axis (16), **characterized by** two middle pivot arms (11, 12) which are articulatingly connected to each other, wherein one middle pivot arm (11) is connected articulatingly to the rear pivot arm (10) at a distance from its pivot axis (17) and the other middle pivot arm (12) is articulatingly connected to the front pivot arm (13) at a distance from its pivot axis (19).

2. Card reader according to claim 1, **characterized in that** the two middle pivot arms (11, 12) are articulatingly connected to each other between the pivot axes (15, 16) of the rear and front pivot arms (10, 13).

3. Card reader according to claim 1 or 2, **characterized in that** the two middle pivot arms (11, 12) are connected to each other via the pivot axis (21) of the middle feed roller (5).

4. Card reader according to claim 1 or 2, **characterized in that** the middle feed roller (5) is mounted only on one of the two middle pivot arms (11, 12).

5. Card reader according to one of the preceding claims, **characterized in that** a read and/or write head (22) of the card reader (1) is provided in the region of the middle feed roller (5).

6. Card reader according to one of the preceding claims, **characterized in that** the restoring force is provided by one or more restoring springs acting on articulating connections (18, 19, 21) of the pivot arms (10, 11, 12, 13) and/or on feed rollers (4, 5, 6).

7. Card reader according to claim 6, **characterized by** a single restoring spring (14) which is at the bottom supported on the pivot axes (15, 16, 17, 19) of the pivot arms (10, 11, 12, 13) and at the top it bears on the pivot axes of the articulating connections (18, 20) of the rear and front pivot arms (10, 13) and on the rear and front feed rollers (4, 6).

8. Card reader according to one of the preceding claims, **characterized in that** on the side of the card path of each feed roller (4, 5, 6) which is opposite the rollers (4, 5, 6) there are mating rollers (7, 8, 9) which each serve as a mating bearing for the card (2) which is being transported.

## Revendications

1. Lecteur de carte (1) avec trois rouleaux de transport (4, 5, 6) montés sur des bras articulés (10, 11, 12, 13), lesquels sont aménagés les uns derrière les autres dans le sens d'insertion (2) de la carte, moyennant quoi les bras articulés (10, 11, 12, 13) sont pivotables et accouplés mobiles sur un plan en angle droit par rapport au chemin de carte en opposition à l'effet d'une force de rappel et moyennant quoi le rouleau de transport arrière (4) dans le sens de l'insertion (2) est monté sur un bras articulé arrière (10) derrière son axe de pivotement (15), et le rouleau de transport avant (6) dans le sens de l'insertion (2) sur un bras articulé avant (13) devant son axe de pivotement (16), **caractérisé par** deux bras articulés (11,12) du milieu reliés l'un à l'autre de manière articulée, moyennant quoi l'un des bras articulés du milieu (11) est relié de manière articulée avec le bras articulé arrière (10) avec un écart par rapport à son axe de pivotement (17), et l'autre bras articulé du milieu (12) avec le bras articulé avant (13) avec un écart par rapport à son axe de pivotement (19).

2. lecteur de carte selon la revendication 1, **caractérisé en ce que** les deux bras articulés du milieu (11, 12) sont reliés l'un à l'autre de manière articulée entre les axes de pivotement (15, 16) des bras articulés avant et arrière (10, 13).

3. Lecteur de carte selon les revendications 1 ou 2, **caractérisé en ce que** les deux bras articulés du milieu (11, 12) sont reliés l'un avec l'autre via l'axe de pivotement (21) du rouleau de transport du milieu (5).

4. Lecteur de carte selon les revendications 1 ou 2, **caractérisé en ce que** le rouleau de transport du milieu (5) est uniquement monté sur l'un des bras articulés (11, 12) du milieu.

5. Lecteur de carte selon l'une quelconque des revendications précédentes, **caractérisé en ce qu'**une tête de lecture et/ou écriture (22) du lecteur de carte (1) est prévue dans la zone du rouleau de transport du milieu (5).

6. Lecteur de carte selon l'une quelconque des revendications précédentes, **caractérisé en ce que** la force de rappel est formée par une ou plusieurs liaisons articulées (18, 19, 21) des bras articulés (10, 11, 12, 13) et/ou par des ressorts de rappel agissant sur les rouleaux de transport (4, 5, 6).

7. Lecteur de carte selon la revendication 6, **caractérisé par** un ressort de rappel (14) unique prenant appui en-bas sur les axes de pivotement (15, 16, 17, 19) des bras articulés (10, 11, 12, 13) et reposant en haut contre les axes de pivotement des liaisons articulées (18, 20) des bras articulés avant et arrière (10, 13) et les rouleaux de transport (4, 6) avant et arrière.

8. Lecteur de carte selon l'une quelconque des revendications antérieures, **caractérisé en ce que** sur le côté du chemin de carte de chaque rouleau de transport (4, 5, 6) situé en face des rouleaux (4, 5, 6), respectivement un contre-rouleau (7), 8, 9) est affecté en guise de butée pour la carte (2) transportée.
